# EUROPEAN PATENT APPLICATION

(11) **EP 4 647 883 A1**
(43) Date of publication of application: **12.11.2025**
(21) Application number: 24738543.8
(22) Date of filing: 04.01.2024
(51) Int. Cl.: G06F 3/0481

(54) **MEDIA INTERACTION METHOD AND APPARATUS, DEVICE AND STORAGE MEDIUM**

(30) Priority: 06.01.2023 CN 202310022129
(71) Applicant: Beijing Zitiao Network Technology Co., Ltd., Beijing 100190 (CN)
(72) Inventor: LU, Xiao, Beijing 100028 (CN); ZENG, Ziyou, Beijing 100028 (CN)
(74) Representative: Grünecker Patent- und Rechtsanwälte PartG mbB
(86) International application number: PCT/CN2024/070661
(87) International publication number: WO 2024/146612

(57) **Abstract**

Embodiments of the present disclosure provide a media interaction method and apparatus, a device, and a storage medium. The method includes: displaying, in a first user interface, information about media content to be disclosed and a first interaction element used for reserving the media content; and presenting a second user interface in response to selection of the first interaction element, wherein the second user interface is at least displayed with: disclosure time information of the media content and a list of media items associated with the media content, wherein a media item that has been at least partially disclosed and a media item that has not been disclosed are displayed in different visual styles. Therefore, a function of reserving media content to be disclosed is provided for a user. This obviously improves user experience.

## Description

### CROSS REFERENCE

The present application claims priority to Chinese Patent Application No. 202310022129.1, filed on January 6, 2023, and entitled "Media interaction method and apparatus, device, and storage medium", the entirety of which is incorporated herein by reference.

### FIELD

Example embodiments of the present disclosure generally relate to the field of computers, and in particular, to a media interaction method and apparatus, a device, and a computer-readable storage medium.

### BACKGROUND

Currently, more and more applications are designed to provide a user with various services. The user may perform various operations on the applications. For example, media playing applications (for example, music player applications) are widely used because of their characteristics of simplicity and convenience in operation, rich resources, and the like. Such a media playing application may present one or more pieces of media content to the user, so that the user can view the content.

### SUMMARY

According to a first aspect of the present disclosure, a media interaction method is provided. The method includes: displaying, in a first user interface, information about media content to be disclosed and a first interaction element used for reserving the media content; and presenting a second user interface in response to selection of the first interaction element, wherein the second user interface is at least displayed with: disclosure time information of the media content and a list of media items associated with the media content, wherein a media item that has been at least partially disclosed and a media item that has not been disclosed are displayed in different visual styles.

According to a second aspect of the present disclosure, a media interaction apparatus is provided. The apparatus includes: a first user interface presenting module configured to: display, in a first user interface, information about media content to be disclosed and a first interaction element used for reserving the media content; and a second user interface presenting module, configured to present a second user interface in response to selection of the first interaction element, wherein the second user interface is at least displayed with: disclosure time information of the media content and a list of media items associated with the media content, wherein a media item that has been at least partially disclosed and a media item that has not been disclosed are displayed in different visual styles.

According to a third aspect of the present disclosure, an electronic device is provided. The device includes at least one processing unit and at least one memory. The at least one memory is coupled to the at least one processing unit and stores an instruction executed by the at least one processing unit. The instruction, when executed by the at least one processing unit, causes the device to execute the method according to the first aspect.

According to a fourth aspect of the present disclosure, a computer-readable storage medium storing a computer program therein is provided. The computer program is executable by a processor to implement the method according to the first aspect.

It should be understood that the content described in the Summary of the Invention is not intended to limit critical or significant features of the embodiments of the present disclosure, nor is it intended to limit the scope of the present disclosure. Other features of the present disclosure will be easily understood through the following description.

### BRIEF DESCRIPTION OF THE SEVERAL VIEWS OF THE DRAWINGS

The above and other features, advantages, and aspects of various embodiments of the present disclosure will become more apparent with reference to the accompanying drawings and the following detailed description. In the accompanying drawings, the same or similar reference numerals denote the same or similar elements.
FIG. 1 is a schematic diagram of an example environment in which embodiments of the present disclosure can be implemented;
FIG. 2 is a schematic diagram of an example architecture for reserving media content according to some embodiments of the present disclosure;
FIG. 3A to FIG. 3C are respectively schematic diagrams of example pages displayed in a media content reserving process according to some embodiments of the present disclosure;
FIG. 4A and FIG. 4B are respectively schematic diagrams of example pages displayed in a process of reserving media content that includes static information according to some embodiments of the present disclosure;
FIG. 5A, FIG. 5B and FIG. 5C are respectively schematic diagrams of example pages displayed in a process of reserving media content that includes dynamic information according to some embodiments of the present disclosure;
FIG. 6 is a schematic diagram of an example page showing an author associated with media content to be disclosed according to some embodiments of the present disclosure;
FIG. 7 is a schematic diagram of an example page that provides an external entrance according to some embodiments of the present disclosure;
FIG. 8A is a schematic diagram of an example page of a media library before media content is disclosed according to some embodiments of the present disclosure;
FIG. 8B is a schematic diagram of an example page of a media library after media content is disclosed according to some embodiments of the present disclosure;
FIG. 9A to FIG. 9C are respectively schematic diagrams of example pages displayed in a media content disclosing process according to some embodiments of the present disclosure;
FIG. 10A and FIG. 10B are respectively schematic diagrams of example pages recommended after media content is disclosed according to some embodiments of the present disclosure;
FIG. 11 is a flowchart of a media interaction process according to some embodiments of the present disclosure;
FIG. 12 is a block diagram of a media interaction apparatus according to some embodiments of the present disclosure; and
FIG. 13 is a block diagram of a device that can implement a plurality of embodiments of the present disclosure.

### DETAILED DESCRIPTION

It may be understood that before using the technical solutions disclosed in various embodiments of the present disclosure, a user shall be informed of the type, scope of use, use scenario and the like of personal information involved in the present disclosure in an appropriate manner in accordance with related laws and regulations, and authorization of the user shall be acquired.

For example, in response to an active request being received from the user, a prompt message is sent to the user to explicitly notify the user that an operation requested to be performed by the user will require acquisition and usage of personal information of the user. Thus, the user can independently select, based on the prompt message, whether to provide his personal information for software or hardware, such as an electronic device, an application program, a server or a storage medium, that performs an operation of a technical solution of the present disclosure.

As an optional but non-restrictive implementation, a manner of sending the prompt message to the user in response to the active request being received from the user may be, for example, using a pop-up window. The prompt message may be presented in the pop-up window in the form of text. In addition, the pop-up window may further carry select controls by which the user selects "agree" or "disagree" when providing personal information for the electronic device.

It may be understood that the foregoing processes of informing the user and acquiring the authorization of the user are merely examples, and do not constitute any limitation on implementations of the present disclosure. Another manner that meets related laws and regulations may also be used in implementation ways of the present disclosure.

It may be understood that data (including but is not limited to the data and acquisition or usage of the data) in the technical solution shall comply with the requirements of corresponding laws and regulations and related provisions.

The embodiments of the present disclosure will be described in more detail below with reference to the accompanying drawings. Although some embodiments of the present disclosure are shown in the accompanying drawings, it should be understood that the present disclosure can be implemented in various forms and should not be construed as being limited to the embodiments illustrated herein. On the contrary, these embodiments are provided for a more thorough and complete understanding of the present disclosure. It should be understood that the accompanying drawings and the embodiments of the present disclosure are merely for illustrative purposes, and are not intended to limit the protection scope of the present disclosure.

It should be noted that the title of any section/sub-section in the Description is not restrictive. Various embodiments are described throughout the Description. An embodiment of any type may be included under any section/sub-section. In addition, an embodiment described in any section/sub-section may be combined in any manner with any other embodiment that is described in the same section/sub-section and/or different sections/sub-sections in any way.

In the description of the embodiments of the present disclosure, the term "include" and similar terms should be understood as non-exclusive inclusion, that is, "including but not limited to". The term "based on" should be understood as "at least partially based on". The terms "an embodiment" or "the embodiment" should be understood as "at least one embodiment". The term "some embodiments" should be understood as "at least some embodiments". Other explicit and implicit definitions may also be included below. The terms "first", "second", and the like may refer to different or the same objects. Other explicit and implicit definitions may also be included below.

The term "in response to" indicates that a corresponding event occurs or a corresponding condition is met. It will be understood that executing timing of a subsequent action to be performed in response to the event or condition is not necessarily highly associated with time at which the event occurs or the condition is met. In some cases, the subsequent action may be executed as soon as the event occurs or the condition is met. In some other cases, the subsequent action may alternatively be executed after the event has been occurred or the condition has been met for a period of time.

As used in the Description, "media" or "media content" may include a variety of forms of content, such as music, a video (including, for example, a short video, a movie, a teleplay, and the like), an image, a text, a play, a variety show, and the like. "Media content" may be a single media item (for example, a single song), or a media album (for example, a song album) that is used as a collection of a plurality of media items. Media items associated with the media album may include any type of media, for example, a video, an audio, an image, and the like. For example, the media content may be a music album. Correspondingly, the media items associated with the media content may include one or more musical pieces (for example, songs), a propaganda video for the music album or a musical piece in the music album, and the like. For another example, the media content may be film and television works. Correspondingly, the media items associated with the media content may include various videos of the film and television works, such as a trailer, a promo, a positive film, a tidbit, and the like.

The term "reserve" indicates a pre-subscription to media content before the media content is officially disclosed. In some embodiments, "reserve" may include "reservation" for media content, for example, storing information related to the media content in a media library of the user. In the Description, the terms "reserve", "subscribe" and "reservation" can be used exchangeably.

The term "disclose" indicates making media content available, accessible, or consumable by means of releasing, issuing, publishing online, or the like. Correspondingly, "to be disclosed" or "undisclosed" to a person or some persons (for example, the user) may indicate that the media content to be disclosed or undisclosed media content is temporarily unavailable, inaccessible, or unconsumable to the person or these persons.

As briefly mentioned above, a media playing application may provide a user with various services related to media content. Before the media content is disclosed officially, there is usually a warm-up phase. Traditionally, in the warm-up phase, there may be some approaches in which the user learns scattered information about new media content that is about the new media content to be disclosed. For example, the user learns disclosure time of the media content by means of one approach, and watches or listens to some of disclosed content (for example, a trailer or a snippet) by means of another approach. However, such scattered information is unfriendly to the user, because it is difficult for the user to know a panorama of the media content to be disclosed and to track a progress of the media content to be disclosed.

Thus, the embodiments of the present disclosure provide a solution of reserving media disclosure. In this solution, information about media content to be disclosed and an interaction element used for reserving the media content are displayed in a first user interface presented to the user. If the interaction element is selected, a second user interface is presented. At least the following are displayed in the second user interface: disclosure time information of the media content and a list of media items included in the media content. A disclosed media item and an undisclosed media item are displayed in different visual styles.

In the embodiments of the present disclosure, a function of subscribing the media content in advance and an interactive design are provided for the user. Before the media content is disclosed, for example, in a propaganda period or a warm-up period, a variety of information about the media content to be disclosed may be presented to the user, so that the user can comprehensively understand the media content to be disclosed. In addition, a reserve function is also provided for the user, helping the user to track the progress of the media content subsequently. In this manner, a function of helping the user to understand and pay attention to the media content to be disclosed is provided for the user. This facilitates the improvement of the user experience.

Some example embodiments of the present disclosure are described below with continued reference to the accompanying drawings.

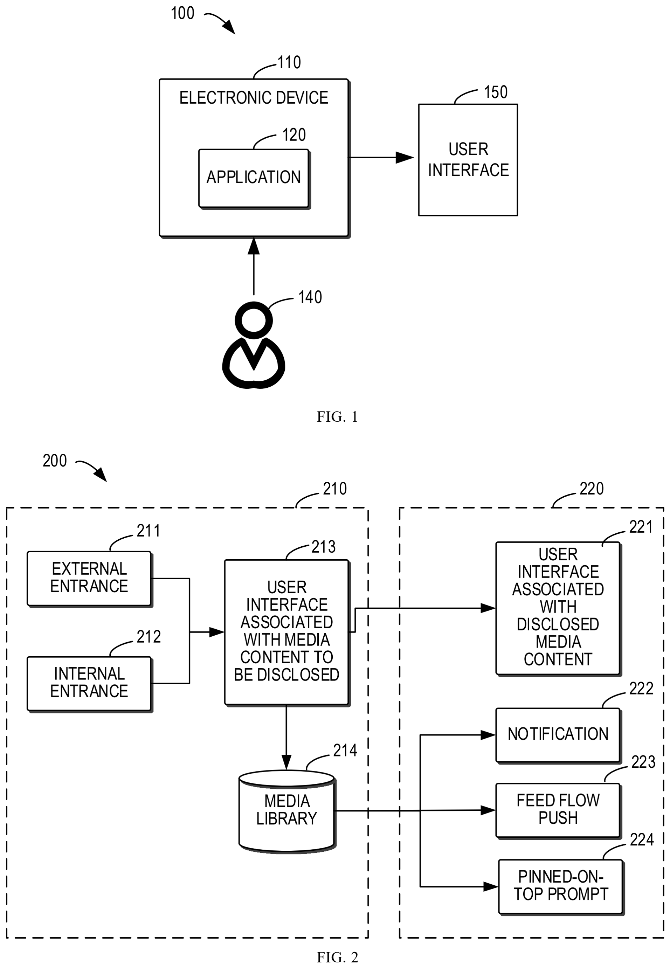

FIG. 1 is a schematic diagram of an example environment 100 in which the embodiments of the present disclosure can be implemented. In the example environment 100, an application 120 is installed in an electronic device 110. A user 140 may interact with the application 120 through the electronic device 110 and/or an attached device of the electronic device 110. The application 120 may be a media playing application, which can provide the user 140 with services related to media content, including browsing, playing, commenting, forwarding, creating, releasing, and the like.

In the environment 100 shown in FIG. 1, if the application 120 is in an active state, the electronic device 110 may present a user interface 150 of the application 120 to the user 140. The user interface 150 may include various pages that can be provided by the application 120, such as a reserving page of the media content, a playing page of the media content, and the like. In addition, in some embodiments, the user interface 150 may also additionally provide a presenting page of the media content, a content creating page, a content editing page, a message page, a personal page, a mall page, and/or the like.

The electronic device 110 may be, for example, a mobile terminal, a fixed terminal, or a portable terminal of any type, such as a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an e-book device, a game device, or any combination thereof. The combination includes accessories and peripherals of these devices, or any combination thereof. In some embodiments, the electronic device 110 can also support a user-oriented interface of any type (such as a "wearable" circuit).

It should be understood that the structure and the function of the environment 100 are described only for an exemplary purpose, rather than to imply any limitation on the scope of the present disclosure.

FIG. 2 is a schematic diagram of an example architecture 200 for reserving media content according to some embodiments of the present disclosure. For ease of discussion, the architecture 200 is described with reference to the environment 100 in FIG. 1. As shown in FIG. 2, generally, the architecture 200 has two phases, namely, a pre-disclosure phase 210 and a disclosure phase 220.

In the pre-disclosure phase 210, one or more entrances may be provided for the user 140, so that the user 140 can access a user interface 213 related to media content to be disclosed before disclosure. The one or more entrances may include an external entrance 211 and/or an internal entrance 212.

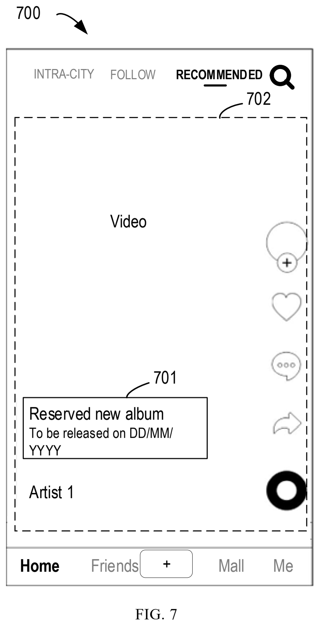

The external entrance 211 may be an approach that is provided by another application (also referred to as an associated application) different from the application 120 and is used for reserving media content. For example, the user 140 can access the user interface 213 of the application 120 through one or more anchors of the associated application. Such an example is described below with reference to FIG. 7. For another example, the user 140 may access the user interface 213 of the application 120 through a smart link.

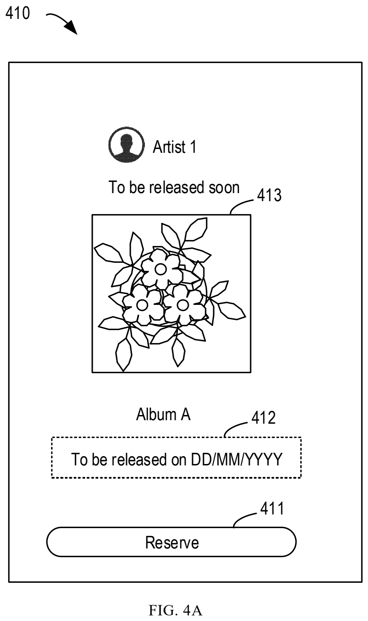

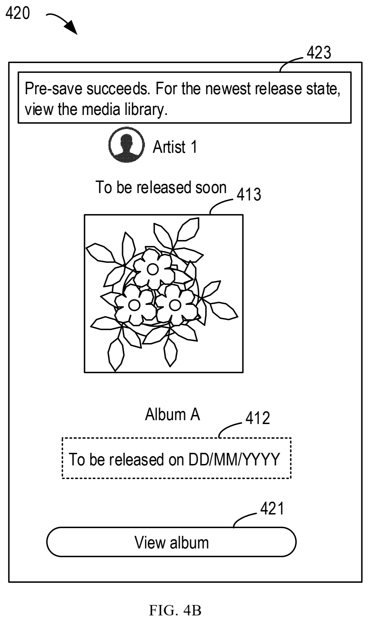

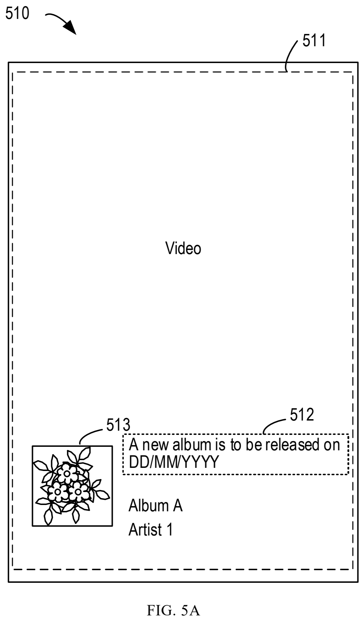

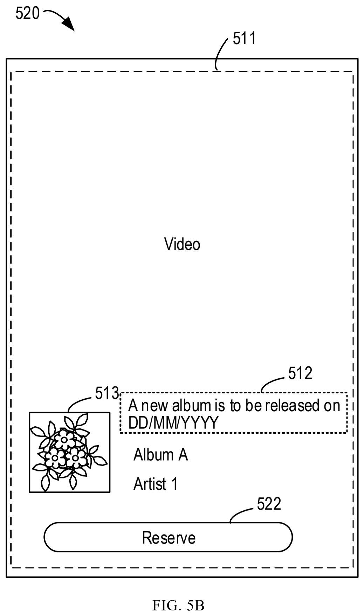

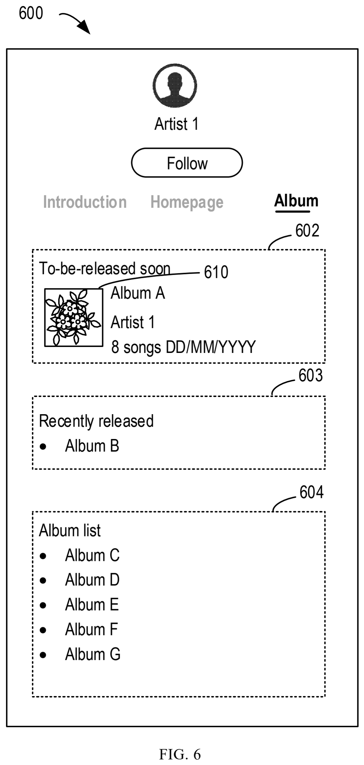

The internal entrance 212 may be an approach that is in the application 120 and is used for reserving media content. For example, the internal entrance 212 may include a page of an author associated with the media content. Such an example is described below with reference to FIG. 6. The author associated with the media content may be any person or group related to production of the media content. For example, an author associated with a song album may be a singer, lyricist, composer, and the like of a song in the song album. For another example, an author associated with film and television works may be an actor, a director, and another worker who participates in creation of the film and television works. Alternatively, or additionally, the internal entrance 212 may include a feed flow pushed by the user. For example, a specially designed media content preview may be pushed in the feed flow. Such examples are described below with reference to FIG. 4A, FIG. 4B, FIG. 5A and FIG. 5B. The feed flow may be configured to recommend media content to the user dynamically or periodically (for example, every day). Alternatively, or additionally, the internal entrance 212 may include: a search page, some resource sites (for example, a page used for introducing media content to be disclosed), and/or the like, in the application 120.

The user interface 213 related to the media content to be disclosed may include various appropriate user interfaces. Specifically, the user interface 213 may include a user interface that provides a reserving function, which may also be referred to as a first user interface. Information about the media content to be disclosed is displayed in the first user interface. The information about the media content to be disclosed may include but is not limited to: a name of the media content, information about an author, expected disclosure time of the media content, a countdown to the expected disclosure time, information about a media item associated with the media content, and/or other related information. An interaction element used for reserving the media content is also displayed in the first user interface, and is also referred to as a first interaction element or a reserving interaction element. The reserving interaction element may be selected by the user 140 to reserve the media content. The reserving interaction element may be implemented in any appropriate form, for example, in the form of a button, a selectable region, a choice box, an icon, or the like. In addition, the reserving interaction element may be identified with content that is easy to be understood by the user to perform a reserving operation, for example, "Subscribe", "Reserve", "Pre-save", "Store beforehand", "Save in advance", and "Pre-follow".

If the electronic device 110 detects selection of the reserving interaction element, a second user interface is presented. The second user interface is at least displayed with disclosure time information of the media content and a list of media items associated with the media content. The disclosure time information of the media content may include disclosure time of the media content, a countdown to the disclosure time, and/or the like. Depending on a type of the media content to be disclosed, the list of the media items may include one or more media items included in or associated with the media content to be disclosed. For example, if the media content is a song album, the list of the media items may be a list of one or more songs included in the song album. For another example, if the media content is film and television works, the list of the media items may be a list of one or more videos (for example, promos, trailers, or tidbits) related to the film and television works.

In the pre-disclosure phase 210, part of the media content to be disclosed is disclosed in advance for the purpose of warming up or the like. For example, a song in the song album or some audio tracks of the song may be released in advance. For another example, a trailer of the film and television works may also be released in the pre-disclosure phase 210. Thus, a media item that has been at least partially disclosed and a media item that has not been disclosed in the list of the media items are displayed in different visual styles at least on the second user interface. The different visual styles may include but are not limited to: different font sizes, font styles, colors, highlighted degrees, and the like. For example, a released trailer and an unreleased positive film are displayed in the second user interface in different styles.

Additionally, in some embodiments, if the electronic device 110 detects selection of the reserving interaction element, the information about the media content to be disclosed is added to a media library 214. Specifically, the information about the media content to be disclosed is saved in the media library 214. In these embodiments, pre-storage of the media content to be disclosed is implemented.

The first user interface, the second user interface, and example embodiments converted therefrom are described below. In some embodiments, the media content may be reserved via a page (also referred to as "first page" hereinafter) dedicated to disclosure of the media content. In other words, the first user interface may include the first page. At least the following may be displayed in the first page: graphics and text information about the media content (also referred to as "first graphics and text information"), the reserving interaction element, the disclosure time information, the list of the media items, and the like. Similar to the second user interface, in the first page, a disclosed media item and an undisclosed media item may be displayed in different visual styles.

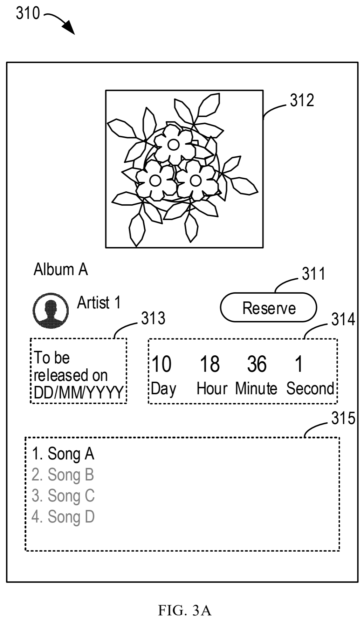

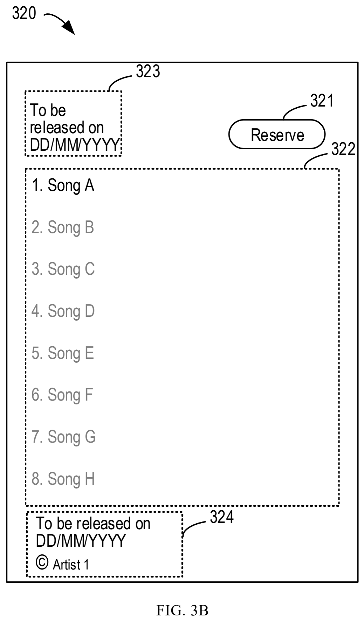

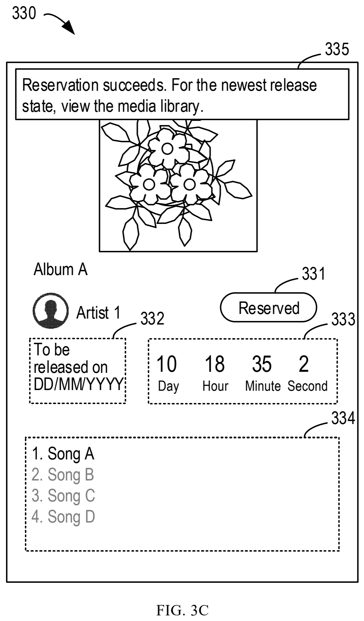

FIG. 3A, FIG. 3B and FIG. 3C are respectively schematic diagrams of example pages 310, 320, and 330 displayed in a media content reserving process according to some embodiments of the present disclosure. In these examples, media content to be disclosed is a song album. The page 310 shown in FIG. 3A is an example of the first page dedicated to disclosure of the media content.

Graphics and text information about the media content to be disclosed is displayed in the page 310. As shown in FIG. 3A, a name "Album A" of the song album, a singer's name "Artist 1" of the song album, and a cover 312 of the song album are displayed in the page 310 as an example. Disclosure time information (which is release time information in this example) of the media content is also displayed in the page 310. Specifically, an expected release date of the song album is displayed in a region 313, indicating that the album A will be released on "DD/MM/YYYY". A countdown to release time is displayed in a region 314, indicating that the release time is 10 days, 18 hours, 36 minutes and 1 second from the current time. A reserving interaction element used for reserving the media content is also displayed in the page 310, and is a reserve button 311 in this example. The user 140 may reserve the album A by clicking on the reserve button 311.

Alternatively, in some embodiments, a list of media items associated with the media content may also be displayed in the first page. Specifically, in the example shown in FIG. 3A, a list 315 of songs included in the song album is also displayed in the page 310. The list 315 includes a media item that has been at least partially released, for example, a song A, and media items that have not been released, for example, a song B, a song C, and a song D. The released song A (for example, a snippet thereof used for preview has been disclosed) is displayed in black font, notifying the user 140 that the song A can be previewed via clicking. The song B, the song C, and the song D that have not been released are displayed in gray font. The user 140 cannot preview these songs even if the user 140 clicks on them. Therefore, because a media item that has been at least partially disclosed and a media item that has not been disclosed are respectively displayed in different visual styles, the user is enabled to distinguish between a currently playable media item and a currently unplayable media item.

It should be understood that in addition to different font colors, a variety of other visual styles may also be used to distinguish between a media item that has been at least partially released and a media item that has not been released. The foregoing description is only exemplary and is not intended to constitute any limitation on the embodiments of the present disclosure.

In some embodiments, in response to an operation (for example, upward swiping or top sticking) performed by the user on the page 310, the electronic device 110 may present the page 320. The page 320 shown in FIG. 3B may be considered as another example of the first page. Similar to the page 310, the media content can also be reserved via the page 320. Specifically, a reserving interaction element used for reserving the media content is displayed in the page 320, and is a reserve button 321 in this example. The user 140 may reserve the album A by clicking on the reserve button 321. Information about the media content to be disclosed is also displayed in the page 320. For example, expected release time of the album A is displayed in a region 323.

A list 322 of media items associated with the media content is displayed in the page 320. Media items displayed in the page 320 are more than those displayed in the page 310. Specifically, the list 322 includes a song A that has been at least partially released and songs B to H that have not been released. Similar to FIG. 3A, different font colors are also used in FIG. 3B to distinguish between a media item in a disclosed state and a media item in an undisclosed state. As shown in FIG. 3B, the released song A is displayed in black font, notifying the user 140 that the song A can be previewed via clicking. The songs B to H that have not been released are displayed in gray font. The user 140 cannot preview these songs even if the user 140 clicks on them. In addition, compared with the page 310, release time and a copy of copyright are displayed in a region 324 under the list 322.

If the user 140 clicks on the reserve button 311 in the page 310 or the reserve button 321 in the page 320, the electronic device 110 presents the page 330 shown in FIG. 3C. The page 330 may be considered as an example of the second user interface.

The page 330 is a page displayed after reservation of the media content is completed. At least disclosure time information of the media content is displayed in the page 330. Specifically, in this example, the expected release date of the album A is displayed in a region 332, indicating that the album A will be released on "DD/MM/YYYY". A countdown to the release time is displayed in a region 333, indicating that the release time is 10 days, 18 hours, 35 minutes and 2 seconds from the current time. A list 334 of media items associated with the media content is also displayed in the page 330. Similar to the list 315, the list 334 includes a song A that has been at least partially released and a song B, a song C, and a song D that have not been released. The released song A is displayed in black font, notifying the user 140 that the song A can be previewed via clicking. The song B, the song C, and the song D that have not been released are displayed in gray font. The user 140 cannot preview these songs even if the user 140 clicks on them. Because a disclosed media item and an undisclosed media item are respectively displayed in different visual styles, the user is enabled to distinguish between a currently playable media item and a currently unplayable media item.

In some embodiments, graphics and text information about the media content may also be displayed in the page 330. For example, FIG. 3C shows a name "Album A" of the song album, a singer "Artist 1" of the song album, and a cover of the song album.

In the example shown in FIG. 3C, an element 331 is displayed in the page 330. The element 331 replaces the reserving interaction element, namely, the reserve button 311 or 321. The element 331 is identified with a word "Reserved". In some embodiments, the element 331 may be non-interactive. Alternatively, in some embodiments, the element 331 may be interactive. For example, reservation of the media content may be canceled in response to selection of the element 331. In some embodiments, the element 331 may not be displayed. In other words, after the first user interface is switched to the second user interface, the reserving interaction element (for example, the "Reserve" button) may be removed directly, instead of being replaced with any element.

As described above, in some embodiments, if the user 140 selects "Reserve" for the media content, the information about the media content may be added to a media library of the user 140. Accordingly, a prompt message may be presented, indicating that reservation has been completed and prompting the user to view a status of the media content from the media library. In the example shown in FIG. 3C, a prompt message 335 is displayed in the page 330. The prompt message 335 is configured to provide feedback on a reserving operation of the user 140, so as to notify the user 140 that the reserving operation succeeds.

The above describes an example embodiment in which reservation is performed via the first page dedicated to disclosure of the media content. Alternatively, or additionally, in some embodiments, the media content may be reserved via a page (also referred to as "second page" hereinafter) that is in a feed flow and used for previewing the media content. In other words, the first user interface may be the second page. Second graphics and text information about the media content, a first interaction element, and the like may be displayed in the second page.

In some embodiments, the second user interface may be presented directly in response to selection of the reserving interaction element in the second page. In some embodiments, the electronic device 110 displays, in response to selection of the reserving interaction element in the second page, a second interaction element used for prompting the user to view the information about the media content, and presents the second user interface (for example, the page 330) in response to selection of the second interaction element.

In the second page, the second graphics and text information may be either static information or dynamic information. Alternatively, or additionally, the first interaction element may be directly displayed in the second page, or the first interaction element may be automatically displayed in response to a time duration for which the second page is presented exceeding a predetermined duration.

Example pages 410 and 420 displayed in a process of reserving media content that includes static information are described below with reference to FIG. 4A and FIG. 4B. The media content still uses the song album as an example in FIG. 4A and FIG. 4B.

The page 410 shown in FIG. 4A may be considered as an example of the second page during implementation. The media content may be reserved via the page 410. Graphics and text information about media content to be disclosed is displayed in the page 410. As an example, a singer's name "Artist 1" of the song album, a name "Album A" of the song album, disclosure time information in a region 412, a cover 413 of the song album, and the like are displayed in the page 410. A reserving interaction element used for reserving the media content, namely, a reserve button 411, is also displayed in the page 410. The user 140 may reserve the album A by clicking on the reserve button 411. Therefore, information about the album A may be added to a media library of the user 140.

If the user clicks on the reserve button 411, the page 410 may be updated to the page 420 shown in FIG. 4B. Compared with the page 410, the page 420 does not include the reserve button 411 in the page 410, but displays a second interaction element, namely, a "View album" button 421. When the user 140 clicks on the "View album" button 421, a second user interface may be presented. For example, the page 330 is presented. In addition, a prompt message 423 is also displayed in the page 420. The prompt message 423 is configured to provide feedback on a reserving operation of the user 140, so as to notify the user 140 that the reserving operation succeeds.

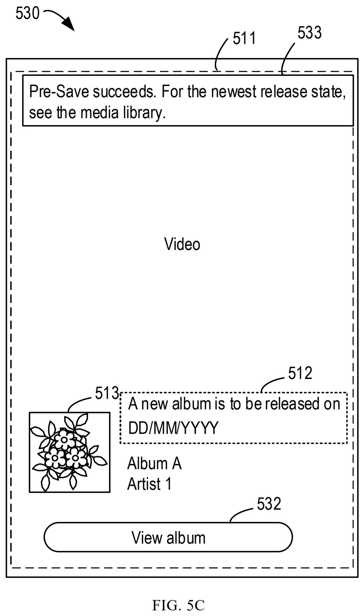

Pages 510, 520, and 530 displayed during reservation of media content that includes dynamic information are described below with reference to FIG. 5A, FIG. 5B, and FIG. 5C. These pages may be considered as examples of the second page during implementation. The page 510 shown in FIG. 5A is configured to preview issuing of the media content, and may be, for example, an album preview page in a feed flow. A video 511 is displayed in the page 510. The video 511 may be, for example, video data of an author associated with media content to be disclosed, a propaganda video of the media content, or the like. In this example, the video 511 may be, for example, video data of a singer Artist 1 of an album A, or the like.

Information about the media content to be disclosed is displayed in the page 510. Specifically, a name "Album A" of the song album, a singer's name "Artist 1" of the song album, and a cover 513 of the song album are displayed in the page 510. Disclosure time information (which is release time information in this example) of the media content is also displayed in the page 510. Specifically, an expected release date of the song album is displayed in a region 512, indicating that the album A will be released on "DD/MM/YYYY".

After the page 510 has been displayed for a predetermined duration (for example, 2 seconds), the page 510 may be updated to the page 520. The page 520 may be considered as an example of the second page during implementation, and is configured to provide a user with a media content reserving service. Compared with the page 510, in addition to graphics and text information about the media content to be disclosed, a reserving interaction element used for reserving the media content, namely, a reserve button 522, is also displayed in the page 520. By clicking on the reserve button 522, the user 140 may reserve the album A, for example, pre-save information about the album A into a media library.

If the user clicks on the reserve button 522, the page 520 may be updated to the page 530 shown in FIG. 5C. Compared with the page 520, the page 530 does not include the reserve button 522, but displays a second interaction element, namely, a "View album" button 532. When the user 140 clicks on the "View album" button 532, a second user interface may be presented. For example, the page 330 is presented. In addition, a prompt message 533 is also displayed in the page 530. The prompt message 533 is configured to provide feedback on a reserving operation of the user 140, so as to notify the user 140 that the reserving operation succeeds.

Interaction related to reservation of the media content to be disclosed is described above. Further reference is made to FIG. 2. As briefly mentioned above, the internal entrance 212 may guide the user to reserve the media content to be disclosed. For example, the feed flow described above may be considered as an example of the internal entrance. In addition, there is also an internal entrance of another type. In some embodiments, a page associated with the media content to be disclosed may be presented via the application 120, and is also referred to as a fourth page. The information about the media content is displayed in the fourth page. If the user 140 selects the information about the media content, the first user interface may be presented. For example, the page 310, the page 410, or the page 520 may be presented. The internal entrance 212 may include a search entrance of the application 120. Accordingly, the fourth page may be a result page presented in response to a search request. The internal entrance 212 may include a resource site in the application 120. Accordingly, the fourth page may be a page that is in the application 120 and is used for introducing the media content to be disclosed.

As briefly mentioned above, in some embodiments, the internal entrance 212 may include a page of an author associated with the media content, and is also referred to as a third page or an author page. The information about the media content to be disclosed may be displayed in the author page. If the user 140 selects the information, the first page, for example, the page 310, may be presented, so that the user is enabled to reserve the media content.

The media content still uses the song album as an example. An example of the author page is described with reference to FIG. 6. The page 600 may be considered as an example of the author page during implementation, and shows a homepage of a singer Artist 1 of the song album. Information about an album of the Artist 1 is displayed in the page 600. Specifically, information about the album A to be disclosed is displayed in a region 602, for example, an album cover 610, a name "Album A" of the song album, release time, and the like. In addition, information about a recently released album (which is an album B in this example) is displayed in a region 603. Information about another album of the Artist 1 is displayed in a region 604.

If a user selects the information displayed in the region 602, the page 600 may be jumped to the first page. Then, the user may reserve media content via the first page. For example, if the user clicks on the album cover 610, the page 310 may be presented. The user may reserve the media content by clicking on the reserve button 311.

Further reference is made to FIG. 2. As briefly mentioned above, the external entrance 211 may also guide the user to reserve the media content to be disclosed. In some embodiments, the external entrance 211 may include an anchor in another application that is different from the application 120. Specifically, a page displaying the information about the media content to be disclosed may be presented via the other application, and is also referred to as a fifth page. The fifth page may be any appropriate page, for example, a page related to an author of the media content. If the user selects the information about the media content in the fifth page, the first user interface, for example, the page 310, the page 410, the page 520, or the like, may be presented via the application 120.

An example of the external entrance is described with reference to FIG. 7. The page 700 is a page that is presented by another application different from the application 120 and provides an external entrance. A video 702 that is being played is related to the author (which is the Artist 1 in this example) of the media content to be disclosed. For example, the video 702 includes an image of the author. An anchor 701 is displayed in the page 700, includes information about a song album to be released, and notifies the user that the new album can be reserved. If the user clicks on the anchor 701, the application 120 may be triggered to present the first user interface. For example, the page 310, the page 410, or the page 520 may be presented via the application 120.

In some embodiments, if the user selects "Reserve" for the media content to be disclosed, the information about the media content may be added to a media library. Then, if a user input for displaying the media library is received, for example, if the user views the media library, the media content to be disclosed may be displayed prior to one or more pieces of disclosed media content.

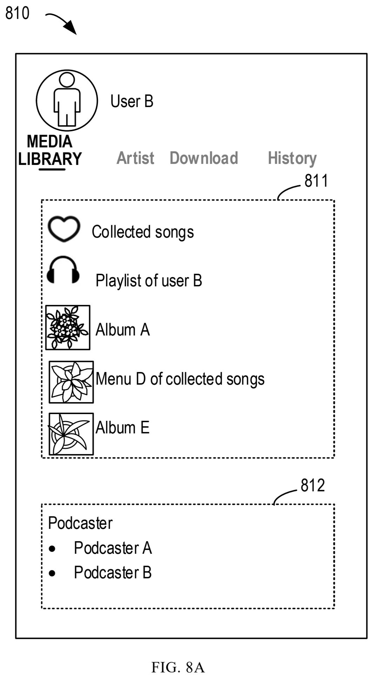

FIG. 8A shows an example page 810 related to a media library according to some embodiments of the present disclosure. In the example shown in FIG. 8A, a user B has reserved the album A to be disclosed. The page 810 is a page related to a media library of the user B. As shown in FIG. 8A, before the album A is released, the media library includes a list 811 of songs/albums and a list 812 of podcasters. In the list 811, the album A that has been reserved but has not been released is arranged after collected songs and a playlist of the user B while before media content that has been released, such as a menu D of collected songs and an album E.

Example interaction before media content is disclosed is described above with reference to FIG. 3A to FIG. 8A. Through various internal entrances and/or external entrances, there may be a variety of approaches for the user to reserve media content that he/she may be interested in.

Further reference is made to FIG. 2. After the media content is disclosed, the pre-disclosure phase 210 ends, and the disclosure phase 220 starts. Accordingly, the user interface 213 is replaced with a user interface 221 associated with disclosed media content.

In some embodiments, in response to the media content being disclosed, the electronic device 110 may display another interaction element (for ease of discussion, the interaction element is referred to as a "fourth interaction element" hereinafter) in the above-mentioned second user interface. The fourth interaction element prompts the user 140 to view the information about the media content. If the user 140 selects the fourth interaction element, the electronic device 110 may present a fourth user interface associated with the media content, which may include, for example, the user interface 221 in FIG. 2. In this manner, the user 140 may conveniently view all media items of released media content in the page 221 of the released media content.

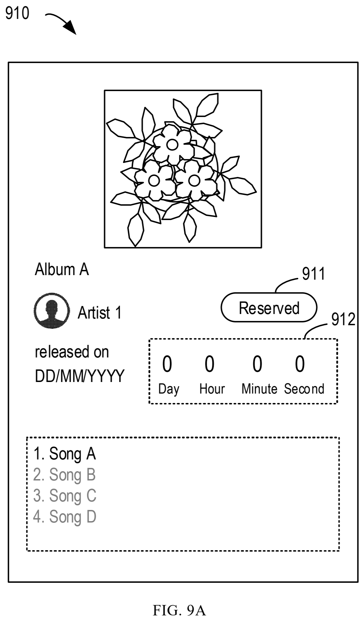

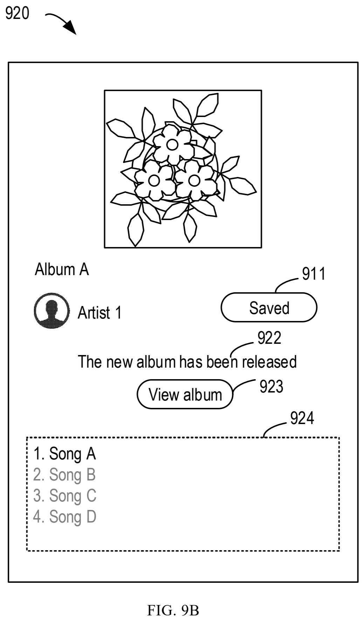

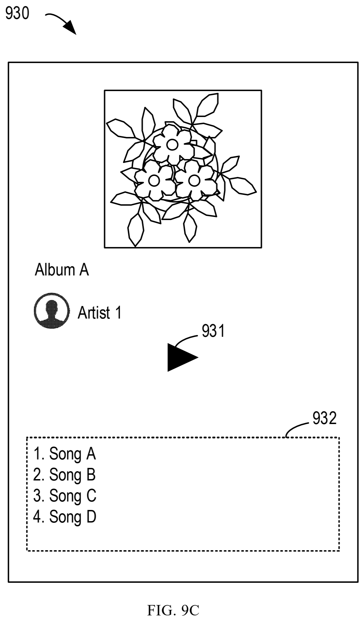

Such embodiments are described with reference to FIG. 9A, FIG. 9B, and FIG. 9C. A page 910 shown in FIG. 9A may be considered as an example of the first page during implementation. Specifically, when the media content is about to be disclosed, that is, when a countdown ends, the page 330 shown in FIG. 3C is updated to the page 910. Similar to the page 330, an element 911 is displayed in the page 910, and is identified with a word "Reserved". Information about the countdown is displayed in a region 912. After the countdown ends, that is, disclosure time of the media content is reached, all values of the countdown are reset to "0".

Then, the page 910 is switched to a page 920 shown in FIG. 9B. An interaction element used for viewing newly disclosed media content, namely, a "View album" button 923 shown in FIG. 9B, is displayed in the page 920. In addition to the "View album" button 923, a prompt text 922 is also displayed in the page 920, enabling the user to know that media content reserved by him/her has been disclosed. The "View album" button 923 may be considered as an example of the fourth interaction element during implementation.

If the user clicks on the "View album" button 923 in the page 920, that is, the interaction element used for viewing the newly released media content is selected, the page 920 is switched to the page 930 shown in FIG. 9C. The page 930 may be considered as an example of the fourth user interface during implementation. An interaction element used for playing the media content, for example, a play button 931, is displayed in the page 930. Then, the user may listen to each song by clicking on the play button 931.

Because the album A has been released currently, all songs included in the album A are accessible. Therefore, in a region 932, all media items (which are songs in this example) are displayed in a same visual style.

Further reference is made to FIG. 2. After the media content is disclosed, a variety of approaches may be used to inform or notify the user that the media content reserved by him/her has been disclosed, helping the user to view or listen to, as early as possible, content that he/she is interested in.

In some embodiments, in response to the media content being disclosed, the electronic device 110 may present a notification 222, reminding the user 140 that the media content has been disclosed. For example, the electronic device 110 may provide the foregoing notification by sending a specially designed message to the user 140 or via a system message. In this way, the user 140 may access and view, in time, the media content that he/she is interested in.

Alternatively or additionally, in some embodiments, in response to the media content being disclosed, the electronic device 110 may use feed flow push 223 to remind the user that the media content reserved by him/her has been disclosed. Therefore, when browsing the feed flow, the user 140 may acquire information about the media content, so that the user can conveniently know that the media content reserved by him/her has been released. For example, in response to the media content being released, the electronic device 110 may present a third user interface, for example, a page that is in the feed flow and used for recommendation. At least a third interaction element is displayed in the third user interface. If the third interaction element is selected, the electronic device 110 may present a fourth user interface associated with the media content.

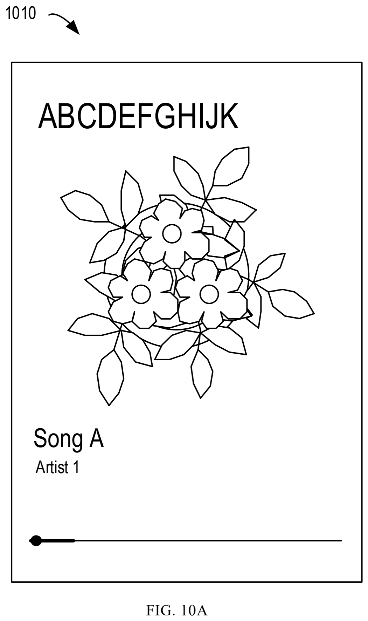

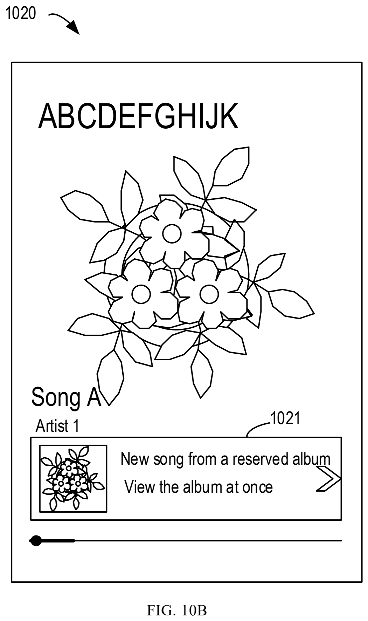

An example is described with reference to FIG. 10A and FIG. 10B. After the media content is disclosed, media items included in the media content may be recommended in the feed flow. In this example, after the album A is released, a song A in the album A may be recommended in the feed flow, so that a user interface 1010 is presented. Through the user interface 1010, the song A is played, and related information thereof is displayed, for example, lyrics "ABCDEFGHIJK", a cover, a song name "Song A", and a singer "Artist 1". After a time duration for which the user interface 1010 is presented exceeds a predetermined duration, the user interface 1010 is updated to a user interface 1020. The user interface 1020 displays an interaction element 1021 which may be considered as an example of the third interaction element during implementation. The interaction element 1021 notifies that the song A is from a song album reserved by the user, and notifies that the song album may be viewed. Therefore, the user 140 may click on the interaction element 1020. If the user clicks on the interaction element 1020, the electronic device 110 may present the fourth user interface, for example, the page 930.

Further reference is made to FIG. 2. Alternatively, or additionally, in some embodiments, in response to the media content being disclosed, the electronic device 110 may use a pinned-on-top prompt 224 in the media library to remind the user that the media content reserved by him/her has been disclosed. Therefore, when browsing his/her own media library, the user 140 may acquire information about the media content, so that the user can conveniently know that the media content reserved by him/her has been released. For example, in response to the media content being released, the electronic device 110 may display the information about the media content at the top of the media library. Through the pinned-on-top displaying, the user is reminded in a striking manner, helping the user to pay attention to the media content reserved by him/her. Therefore, the user may view the media content as early as possible.

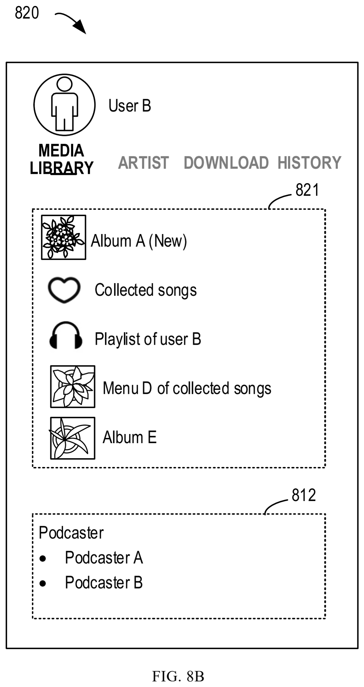

FIG. 8B shows an example page 820 related to a media library after the media content is disclosed. Compared with the page 810, after the album A is released, a priority of the album A in the media library is raised to be ranked first in a list 821. In addition, newly disclosed media content may be highlighted, or added with an additional label. For example, as shown in FIG. 8B, a label "(New)" is added behind the album A to notify the user that the album A is a newly released album.

The page 820 shown in FIG. 8B corresponds to a scenario that is discussed in FIG. 8A and in which the media content has been reserved and has been released for a period of time (for example, 7 days). As shown in FIG. 8B, the media library still includes the list 821 of songs/albums and a list 822 of podcasters.

The pinned-on-top displaying of the information about the media content may be stopped under some conditions. In some embodiments, if a time duration for which the information about the media content is displayed reaches the predetermined duration, the pinned-on-top displaying of the information about the media content may be stopped. For example, after the album A has been released for 7 days, the album A is no longer ranked first in the list 821, for example, may be placed after the menu D of collected songs. Alternatively, or additionally, in some embodiments, if the electronic device 110 receives a user input for viewing the information about the media content, the pinned-on-top displaying of the information about the media content may be stopped. For example, if the user has viewed or played the album A, the album A is no longer ranked first in the list 821.

The above describes an example embodiment in which the user is reminded, after the media content is disclosed, that the media content reserved by him/her has been disclosed. Through a variety of approaches, the user is enabled to view, as early as possible, newly disclosed content that he/she is interested in.

User interfaces and pages used in media interaction are described above with reference to FIG. 3A to FIG. 10B. It should be understood that these user interfaces and pages are merely examples. For example, an interaction element being identified with a word "Reserved" or words "View album" is only exemplary, and is not intended to limit the scope of the present disclosure. In the embodiments of the present disclosure, the interaction element may be presented in any appropriate manner, and may be provided or not be provided with a text label. For another example, the disclosure time and the countdown shown in the accompanying drawings are only exemplary. In the embodiments of the present disclosure, the disclosure time and the countdown that are displayed may have any appropriate time granularity.

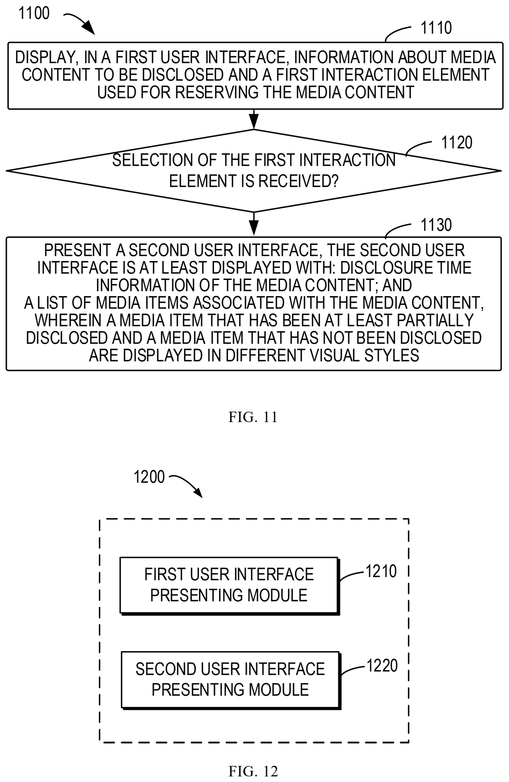

FIG. 11 illustrates a flowchart of a media interaction process 1100 according to some embodiments of the present disclosure. The process 700 may be implemented at the electronic device 110. The process 1100 is described below with reference to the environment 100 of FIG. 1.

At block 1110, the electronic device 110 displays, in a first user interface, information about media content to be disclosed and a first interaction element used for reserving the media content.

In some embodiments, the first user interface comprises a first page dedicated to disclosure of the media content, wherein at least the following are displayed in the first page: first graphics and text information about the media content, the first interaction element, the disclosure time information, and the list. Alternatively, or additionally, the first user interface comprises a second page in a feed flow and used to preview the media content, wherein second graphics and text information about the media content and the first interaction element are displayed in the second page.

In some embodiments, the process 1100 further comprises displaying the information about the media content in a third page associated with an author of the media content, displaying the information about the media content; and presenting the first page in response to selection of the information about the media content.

In some embodiments, in the second page, the second graphics and text information is static information or dynamic information.

In some embodiments, in the second page, the first interaction element is automatically displayed in response to a time duration for which the second page is presented exceeding a predetermined duration.

At block 1120, the electronic device 110 determines whether selection of the first interaction element is received. If the selection of the first interaction element is received, the process 1100 proceeds to the block 1130. At block 1130, the electronic device 110 presents second user interface, the second user interface is at least displayed with: disclosure time information of the media content; and a list of media items associated with the media content, wherein a media item that has been at least partially disclosed and a media item that has not been disclosed are displayed in different visual styles.

In some embodiments, the disclosure time information comprises at least one of the following: disclosure time of the media content; or a countdown to the disclosure time.

In some embodiments, presenting the second user interface in response to the selection of the first interaction element comprises: in response to selection of the first interaction element in the second page, displaying a second interaction element prompting to view the information about the media content; and in response to selection of the second interaction element, presenting the second user interface.

In some embodiments, the process 1100 further comprises: presenting a fourth page associated with the media content via a media playing application for playing the media content, wherein the information about the media content is displayed in the fourth page; and in response to selection of the information about the media content, presenting the first user interface via the media playing application.

In some embodiments, the process 1100 further comprises: presenting a fifth page via another application different from a media playing application for playing the media content, wherein the information about the media content is displayed in the fifth page; and in response to selection of the information about the media content, presenting the first user interface via the media playing application.

In some embodiments, the process 1100 further comprises: presenting a third user interface in response to the media content being disclosed, wherein at least a third interaction element is displayed in the third user interface; and presenting a fourth user interface associated with the media content in response to selection of the third interaction element.

In some embodiments, the third interaction element is displayed in response to a time duration for which the third user interface is presented exceeding a predetermined duration.

In some embodiments, the process 1100 further comprises: in response to selection of the first interaction element, adding the information about the media content to a media library; and in response to a user input for displaying the media library, enabling the media content to be disclosed to be displayed prior to one or more pieces of disclosed media content.

In some embodiments, the process 1100 further comprises: in response to the media content being disclosed, displaying the information about the media content at the top of a media library.

In some embodiments, the process 1100 further comprises: terminating displaying the information about the media content at the top in response to at least one of the following: a time duration for which the information about the media content is displayed at the top exceeding a predetermined duration; or a user input for viewing the information about the media content being received.

In some embodiments, the process 1100 further comprises: in response to the media content being disclosed, displaying, in the second user interface, a fourth interaction element prompting to view the information about the media content; and presenting a fourth user interface associated with the media content in response to selection of the fourth interaction element.

FIG. 12 shows a block diagram of an apparatus 1200 for media public reservation according to some embodiments of the present disclosure. The apparatus 1200 can be implemented or included in the electronic device 110. The various modules/components in the apparatus 1200 can be implemented by hardware, software, firmware, or any combination thereof.

As illustrated in FIG. 12, the apparatus 1200 includes a first user interface presenting module 1210, configured to display, in a first user interface, information about media content to be disclosed and a first interaction element used for reserving the media content. The apparatus 1200 further includes a second user interface presenting module 1220 configured to present a second user interface in response to selection of the first interaction element, wherein the second user interface is at least displayed with: disclosure time information of the media content; and a list of media items associated with the media content, wherein a media item that has been at least partially disclosed and a media item that has not been disclosed are displayed in different visual styles

In some embodiments, the disclosure time information comprises at least one of the following: disclosure time of the media content; or a countdown to the disclosure time.

In some embodiments, the first user interface comprises at least one of the following: a first page dedicated to disclosure of the media content, wherein at least the following are displayed in the first page: first graphics and text information about the media content, the first interaction element, the disclosure time information, and the list; or a second page in a feed flow and used to preview the media content, wherein second graphics and text information about the media content and the first interaction element are displayed in the second page.

In some embodiments, the first user interface presenting module 1210 is further configured to: display the information about the media content in a third page associated with an author of the media content; and present the first page in response to selection of the information about the media content.

In some embodiments, in the second page, the second graphics and text information is static information or dynamic information.

In some embodiments, in the second page, the first interaction element is automatically displayed in response to a time duration for which the second page is presented exceeding a predetermined duration.

In some embodiments, the second user interface presenting module 1220 is further configured to: in response to selection of the first interaction element in the second page, display a second interaction element prompting to view the information about the media content; and in response to selection of the second interaction element, present the second user interface.

In some embodiments, the apparatus 1200 further comprises a fourth page presenting module configured to: present a fourth page associated with the media content via a media playing application for playing the media content, wherein the information about the media content is displayed in the fourth page; and in response to selection of the information about the media content, present the first user interface via the media playing application.

In some embodiments, the apparatus 1200 further comprises a fifth page presenting module configured to: present a fifth page via another application different from a media playing application for playing the media content, wherein the information about the media content is displayed in the fifth page; and in response to selection of the information about the media content, present the first user interface via the media playing application.

In some embodiments, the apparatus 1200 further comprises a third user interface presenting module configured to: present a third user interface in response to the media content being disclosed, wherein at least a third interaction element is displayed in the third user interface; and present a fourth user interface associated with the media content in response to selection of the third interaction element.

In some embodiments, the third interaction element is displayed in response to a time duration for which the third user interface is presented exceeding a predetermined duration.

In some embodiments, the apparatus 1200 further comprises an adding module configured to: in response to selection of the first interaction element, add the information about the media content to a media library; and in response to a user input for displaying the media library, enable the media content to be disclosed to be displayed prior to one or more pieces of disclosed media content.

In some embodiments, the apparatus 1200 further comprises a top presenting module configured to: in response to the media content being disclosed, display the information about the media content at the top of a media library.

In some embodiments, the top presenting module is further configured to: terminate displaying the information about the media content at the top in response to at least one of the following: a time duration for which the information about the media content is displayed at the top exceeding a predetermined duration; or a user input for viewing the information about the media content being received.

In some embodiments, the second user interface presenting module 1220 is further configured to: in response to the media content being disclosed, display, in the second user interface, a fourth interaction element prompting to view the information about the media content; and present a fourth user interface associated with the media content in response to selection of the fourth interaction element.

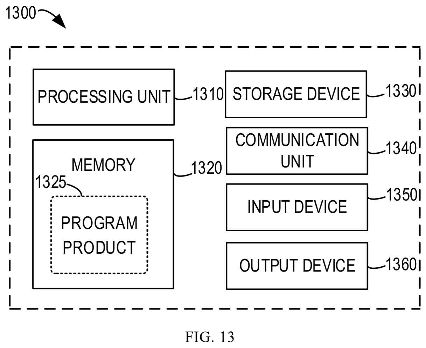

FIG. 13 illustrates a block diagram of a computing device 1300 according to one or more embodiments of the present disclosure. It should be understood that the computing device 1300 shown in FIG. 13 is merely exemplary and should not constitute any limitation on the functionality and scope of the embodiments described herein. The computing device 1300 shown in FIG. 13 may be used to implement the electronic device 110.

As shown in FIG. 13, the electronic device 1300 is in the form of a general computing device. The components of electronic device 1300 may include, but are not limited to, one or more processors or processing units 1310, a memory 1320, a storage device 1330, one or more communication units 1340, one or more input devices 1350, and one or more output devices 1360. The processing unit 1310 may be an actual or virtual processor and can execute various processes based on the programs stored in the memory 1320. In a multiprocessor system, multiple processing units execute computer executable instructions in parallel to improve the parallel processing capability of the electronic device 1300.

The electronic device 1300 typically includes multiple computer storage medium. Such medium may be any available medium that is accessible to the electronic device 1300, including but not limited to volatile and non-volatile medium, removable and non-removable medium. The memory 1320 may be volatile memory (for example, a register, cache, a random access memory (RAM)), a non-volatile memory (for example, a read-only memory (ROM), an electrically erasable programmable read-only memory (EEPROM), a flash memory), or any combination thereof. The storage device 1330 may be any removable or non-removable medium, and may include a machine readable medium such as a flash drive, a disk, or any other medium, which may be used to store information and/or data (such as training data for training) and may be accessed within the electronic device 1300.

The electronic device 1300 may further include additional removable /non-removable, volatile/non-volatile storage medium. Although not shown in FIG. 13, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 1320 may include a computer program product 1325, which has one or more program units configured to perform various methods or acts of various implementations of the present disclosure.

The communication unit 1340 communicates with a further electronic device through the communication medium. In addition, functions of components in the electronic device 1300 may be implemented by a single computing cluster or multiple computing machines, which can communicate through a communication connection. Therefore, the electronic device 1300 may be operated in a networking environment using a logical connection with one or more other servers, a network personal computer (PC), or another network node.

The input device 1350 may be one or more input devices, such as a mouse, a keyboard, a trackball, etc. The output device 1360 may be one or more output devices, such as a display, a speaker, a printer, etc. The electronic device 1300 may also communicate with one or more external devices (not shown) through the communication unit 1340 as required. The external device, such as a storage device, a display device, etc., communicate with one or more devices that enable users to interact with the electronic device 1300, or communicate with any device (for example, a network card, a modem, etc.) that makes the electronic device 1300 communicate with one or more other electronic devices. Such communication may be executed via an input/output (I/O) interface (not shown).

According to example implementation of the present disclosure, a computer-readable storage medium is provided, on which a computer-executable instruction or computer program is stored, wherein the computer-executable instructions is executed by the processor to implement the method described above. According to example implementation of the present disclosure, a computer program product is also provided. The computer program product is physically stored on a non-transient computer-readable medium and includes computer-executable instructions, which are executed by the processor to implement the method described above.

Various aspects of the present disclosure are described herein with reference to the flow chart and/or the block diagram of the method, the apparatus, the device and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, specialized computers or other programmable data processing devices to produce a machine that generates an apparatus to implement the functions/actions specified in one or more blocks in the flow chart and/or the block diagram when these instructions are executed through the computer or other programmable data processing apparatuses. These computer-readable program instructions may also be stored in a computer-readable storage medium. These instructions enable a computer, a programmable data processing apparatus and/or other devices to work in a specific way. Therefore, the computer-readable medium containing the instructions includes a product, which includes instructions to implement various aspects of the functions/actions specified in one or more blocks in the flowchart and/or the block diagram.

The computer-readable program instructions may be loaded onto a computer, other programmable data processing apparatus, or other devices, so that a series of operational steps may be performed on a computer, other programmable data processing apparatus, or other devices, to generate a computer-implemented process, such that the instructions which execute on a computer, other programmable data processing apparatuses, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a unit, a program segment or instructions, which contains one or more executable instructions for implementing the specified logic function. In some alternative implementations, the functions labeled in the block may also occur in a different order from those labeled in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description is an example, not exhaustive, and is not limited to the disclosed implementations. Without departing from the scope and spirit of the described implementations, many modifications and changes are obvious to ordinary skill in the art. The selection of terms used in the present disclosure aims to best explain the principles, practical application or improvement of technology in the market of each implementation, or to enable other ordinary skill in the art to understand the various implementations disclosed herein.

## Claims

1. A media interaction method, comprising:
displaying, in a first user interface, information about media content to be disclosed and a first interaction element used for reserving the media content; and
presenting a second user interface in response to selection of the first interaction element, wherein the second user interface is at least displayed with:
disclosure time information of the media content; and
a list of media items associated with the media content, wherein a media item that has been at least partially disclosed and a media item that has not been disclosed are displayed in different visual styles.

2. The method according to claim 1, wherein the disclosure time information comprises at least one of the following:
disclosure time of the media content; or
a countdown to the disclosure time.

3. The method according to claim 1, wherein the first user interface comprises at least one of the following:
a first page dedicated to disclosure of the media content, wherein at least the following are displayed in the first page: first graphics and text information about the media content, the first interaction element, the disclosure time information, and the list; or
a second page in a feed flow and used to preview the media content, wherein second graphics and text information about the media content and the first interaction element are displayed in the second page.

4. The method according to claim 3, further comprising:
displaying the information about the media content in a third page associated with an author of the media content; and
presenting the first page in response to selection of the information about the media content.

5. The method according to claim 3, wherein in the second page, the second graphics and text information is static information or dynamic information.

6. The method according to claim 3, wherein in the second page, the first interaction element is automatically displayed in response to a time duration for which the second page is presented exceeding a predetermined duration.

7. The method according to claim 3, wherein presenting the second user interface in response to the selection of the first interaction element comprises:
in response to selection of the first interaction element in the second page, displaying a second interaction element prompting to view the information about the media content; and
in response to selection of the second interaction element, presenting the second user interface.

8. The method according to claim 1, further comprising:
presenting a fourth page associated with the media content via a media playing application for playing the media content, wherein the information about the media content is displayed in the fourth page; and
in response to selection of the information about the media content, presenting the first user interface via the media playing application.

9. The method according to claim 1, further comprising:
presenting a fifth page via another application different from a media playing application for playing the media content, wherein the information about the media content is displayed in the fifth page; and
in response to selection of the information about the media content, presenting the first user interface via the media playing application.

10. The method according to claim 1, further comprising:
presenting a third user interface in response to the media content being disclosed, wherein at least a third interaction element is displayed in the third user interface; and
presenting a fourth user interface associated with the media content in response to selection of the third interaction element.

11. The method according to claim 10, wherein the third interaction element is displayed in response to a time duration for which the third user interface is presented exceeding a predetermined duration.

12. The method according to claim 1, further comprising:
in response to selection of the first interaction element, adding the information about the media content to a media library; and
in response to a user input for displaying the media library, enabling the media content to be disclosed to be displayed prior to one or more pieces of disclosed media content.

13. The method according to claim 1, further comprising:
in response to the media content being disclosed, displaying the information about the media content at the top of a media library.

14. The method according to claim 13, further comprising:
terminating displaying the information about the media content at the top in response to at least one of the following:
a time duration for which the information about the media content is displayed at the top exceeding a predetermined duration; or
a user input for viewing the information about the media content being received.

15. The method according to claim 1, further comprising:
in response to the media content being disclosed, displaying, in the second user interface, a fourth interaction element prompting to view the information about the media content; and
presenting a fourth user interface associated with the media content in response to selection of the fourth interaction element.

16. A media interaction apparatus, comprising:
a first user interface presenting module, configured to display, in a first user interface, information about media content to be disclosed and a first interaction element used for reserving the media content; and
a second user interface presenting module configured to present a second user interface in response to selection of the first interaction element, wherein the second user interface is at least displayed with:
disclosure time information of the media content; and
a list of media items associated with the media content, wherein a media item that has been at least partially disclosed and a media item that has not been disclosed are displayed in different visual styles.

17. An electronic device, comprising:
at least one processing unit; and
at least one memory, wherein the at least one memory is coupled to the at least one processing unit and stores an instruction executed by the at least one processing unit, and the instruction, when executed by the at least one processing unit, causes the electronic device to perform the method according to any one of claims 1 to 15.

18. A computer-readable storage medium storing a computer program therein, wherein the computer program is executable by a processor to implement the method according to any of claims 1 to 15.
